Europäisches Patentamt

European Patent Office

Office européen des brevets

(19)

(11) Veröffentlichungsnummer: **0 042 910**
**B2**

(12) **NEUE EUROPÄISCHE PATENTSCHRIFT**

(45) Veröffentlichungstag der neuen Patentschrift:
**19.12.90**

(51) Int. Cl.⁵: **B 60 K 5/12, F 16 F 9/10**

(21) Anmeldenummer: **81101999.1**

(22) Anmeldetag: **18.03.81**

(54) **Hydraulisch dämpfendes Einkammerlager.**

(30) Priorität: **27.06.80 DE 3024089**

(43) Veröffentlichungstag der Anmeldung:
**06.01.82 Patentblatt 82/01**

(45) Bekanntmachung des Hinweises auf die
Patenterteilung:
**11.09.85 Patenblatt 85/37**

(45) Bekanntmachung des Hinweises auf die
Entscheidung über den Einspruch:
**19.12.90 Patentblatt 90/51**

(84) Benannte Vertragsstaaten:
**BE FR GB IT NL SE**

(56) Entgegenhaltungen:
EP-A-0 040 290
DE-A-2 727 244
DE-A-2 802 896
DE-A-2 905 090
DE-A-2 906 282
DE-A-2 937 052
DE-B-2 833 776
DE-C-2 718 121
US-A-2 380 899

(73) Patentinhaber: **Boge GmbH**
**Bogestrasse 50**
**D-5208 Eitorf/Sieg (DE)**

(72) Erfinder: **Brenner, Heinz, Ing. grad.**
**Am Thurmberg 11**
**D-5483 Bad Neuenahr-Ahrweiler (DE)**
Erfinder: **Büth, Peter**
**Himmelsburger Strasse 145**
**D-5483 Bad Neuenahr-Ahrweiler (DE)**
Erfinder: **Meyer, Heinrich, Dipl.-Ing.**
**Am Limperichsberg 4**
**D-5330 Königswinter 41 (DE)**
Erfinder: **Neuburger, Wilhelm**
**Schlossallee 19**
**D-5300 Bonn - Bad Godesberg (DE)**
Erfinder: **Quast, Jörn-Reiner, Ing. grad.**
**Am Kurgarten 64**
**D-5485 Sinzig-Bad Bodendorf (DE)**
Erfinder: **Schmidt, Kurt**
**Ringstrasse 34**
**D-5483 Bad Neuenahr-Ahrweiler (DE)**
Erfinder: **Zelesnik, Manfred**
**Weeg 10**
**D-5204 Lohmar 21 (DE)**

EP 0 042 910 B2

Courier Press, Leamington Spa, England.

**Beschreibung**

Die Erfindung bezieht sich auf ein hydraulisch dämpfendes Lager, insbesondere Motorlager für Kraftfahrzeuge, bestehend aus einem Lagerkörper mit kegeliger Außenfläche und einem damit verbundenen, ringförmigen, gummielastischen Federelement, einem an dem Federelement angeschlossenen, eine Membran, einen Faltenbalg und eine Deckplatte aufnehmenden Verbindungsflansch, einer von Lagerkörper, Federelemente, Verbindungsflansch und Membran begrenzten, mit Dämpfungsflüssigkeit gefüllten Kammer und einem von der Membran und dem Faltenbalg umschlossenen Ausgleichsraum, de über eine Drosselöffnung in der Membran mit der Kammer verbunden ist und zumindest einen Teil der Dämpfungsflüssigkeit drucklos aufnimmt, wobei die aus elastischem Werkstoff bestehende Membran Anschlagflächen aufweist, welchen nahe der Einspannstelle beidseitig je ein ringförmiger Anschlag (24, 26) zugeordnet ist.

Es sind derartige Lager bekannt (z.B. DE—A—27 27 244), die zwischen den beiden Kammern eine Membran aufweisen, wobei die mit Dämpfungsflüssigkeit gefüllte Kammer über eine Drosselöffnung mit einem zumindest einen Teil der Dämpfungsflüssigkeit der Kammer drucklos aufnehmenden, elastisch verformbaren Ausgleichsraum verbunden ist. Es ist jedoch vorgesehen, daß entweder die Membran zwischen zwei gelöcherten Platten beweglich aufgenommen ist oder im äußeren Bereich der Membran mit relativ großen Durchtrittsöffnungen versehen ist. Nachteilig ist dabei, daß entweder die gewünschte Federkennlinie nicht exakt zu erreichen ist, oder daß durch die gelöcherten Gitterplatten und den Druckausgleich der beiden Kammern Klappergeräusche entstehen, indem sich die Gummimembranplatten schlagartig an die gelöcherten Platten anlegen und danach noch eine eventuelle Verformung der Membran in die Gitter hinein erfolgt.

Darüber hinaus ist ein Lager bekannt (z.B. DE—A—28 02 896), bei welchem die Motorlast zum größten Teil durch den bei Einfederung im Lager erzeugten hydraulischen Druck getragen wird. Ein derartiges Lager ist nicht geeignet, einen Teil der Dämpfungsflüssigkeit in einem Ausgleichsraum drucklos aufzunehmen.

Der Erfindung liegt deshalb die Aufgabe zugrunde, ein Lager zu schaffen, das nicht nur einen einfachen Lageraufbau besitzt, sondern bei dem die Membran so ausgebildet ist, daß hochfrequente Schwingungen mit kleinen Amplituden, wie sie vom laufenden Motor erzeugt werden, kaum gedämpft werden, während niederfrequente Schwingungen mit großen Amplituden, die beispielsweise durch Fahrbahnunebenheiten entstehen, stark gedämpft werden.

Zur Lösung dieser Aufgabe ist erfindungsgemäß vorgesehen, daß die ringförmigen Anschläge auf der Membran radial von innen nach außen verlaufend im axialen Abstand zu den Anschlagflächen angeordnet sind, daß die ringförmigen Anschläge Bestandteil der Membran sind und daß die Oberflächen der Membran im benachbarten Bereich der Einspannstelle der Membran als Anschlagfläche dienen.

Vorteilhaft ist dabei, daß die hochfrequenten Schwingungen mit kleinen Amplituden nicht oder nur unbedeutend gedämpft werden. Die niederfrequenten Schwingungen im Bereich von ca. 5 bis 20 Hertz und großen Amplituden werden dabei stark gedämpft. Von Vorteil ist darüber hinaus, daß durch die Anschläge der Membran das Lager hinsichtlich der auftretenden Geräusche bzw. der Geräuschisolierung verbessert wird und ein Klappern der membranartigen Stirnwand verhindert wird.

Nach einem weiteren wesentlichen Merkmal ist vorgesehen, daß die Anschläge durch zentrisch auf der Membran befestigte Platten gebildet sind.

Eine weitere Ausgestaltung sieht vor, daß die Anschläge der Membran durch abwechselnd nach beiden Seiten abgekröpfte Vorsprünge eines in die Membran eingebetteten Bleches gebildet sind.

Alle Membranen zeichnen sich dadurch aus, daß die Federcharakteristik jeder Membran bei kleinen Amplituden sehr weich verläuft. Bei größeren Amplituden, etwa von 0,3 mm an, verläuft die Federkennlinie sanft ansteigend progressiv und ab etwa 1 mm Federweg ist eine starke Progression vorhanden, was zu stärkerer Dämpfung von Schwingungen mit großen Amplituden führt. Vorteilhaft ist des weiteren, daß durch den sanften Übergang zwischen dem ersten und zweiten Bereich der Federkennlinie Klappergeräusche der Membran vermieden werden. Außerdem besitzt das Lager einen einfachen Aufbau und läßt sich leicht und schnell montieren. Die in der Membran befindliche Drosselöffnung kann mit der Herstellung der Membran gefertigt werden. Durch die Deckplatte ist der dünnwandige Faltenbalg des Ausgleichsraumes vor Beschädigungen durch äußere Einwirkungen geschützt. Das Lager besitzt den weiteren Vorteil, daß es unabhängig vom Einfederungszustand arbeitet und bei einem eventuellen Druckaufbau im Lager beidseitig die Membran beaufschlagt.

Weitere Einzelheiten, Merkmale und Vorteile des Gegenstandes der Erfindung werden nachfolgend anhand mehrerer, in einer Zeichnung dargestellten Ausführungsbeispiele näher erläutert. Dabei zeigen:

Figur 1 eine Ansicht-/Schnittdarstellung eines Einkammerlagers gemäß internem Stand der Technik.

Figur 2 bis 3 Ausbildungen der Membran gemäß der Erfindung.

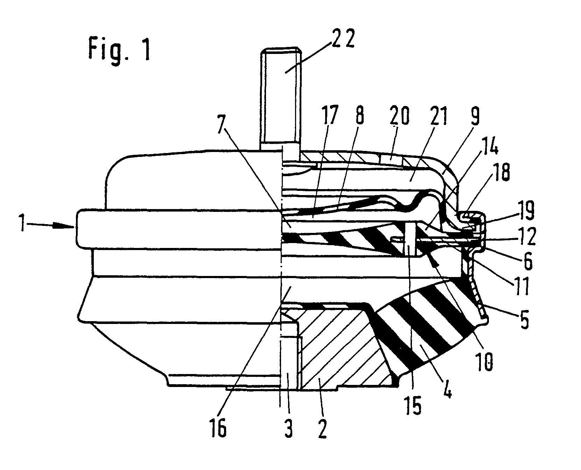

Das in der Figur 1 der Zeichnung wiedergegebene Einkammerlager 1 besitzt einen metallischen Lagerkörper 2, der zu seiner Befestigung entweder mit einer Gewindebohrung 3 oder mit einem nicht gezeichneten Gewindestift versehen ist. An die kegelig ausgebildete Mantelfläche des Lagerkörpers 2 ist eine ringförmige Gummifeder 4 in an sich bekannter Weise anvulkanisiert, die an ihrer dem Lagerkörper 2 abgewandten Anschlußfläche mit einem Verbindungsflansch 5 vereinigt ist. Im gezeichneten Ausführungsbeispiel erstreckt sich eine dünne Schicht der Gummimasse über die nach innen gerichtete Fläche des Lagerkörpers 2 und in den freien Bereich des Verbindungsflansches 5. Bedarfsweise kann sich diese Schicht sogar bis in eine Bördelung 6 des Verbindungsflansches 5 erstrecken, die eine Membran 7, einen tellerartigen Faltenbalg 8 und eine nach außen gewölbte Deckplatte 9 einspannend aufnimmt.

Die Membran 7 ist gemäß der Figur 1 aus beispielsweise einem Gummiteil 10 gebildet, das einen verhältnismäßig dünnen, umlaufenden äußeren Rand 11 besitzt, der durch einen einvulkanisierten Blechring 12 verstärkt ist. Über diesen Rand 11 ist die Membran 7 in der Bördelung 6 des Verbindungsflansches 5 fest eingespannt.

Im Bereich des Wulstes 14 besitzt die Membran 7 mindestens eine Drosselöffnung 15, über die eine von der Membran 7, einem Teil des Verbindungsflansches 5, der Gummifeder 4 und dem Lagerkörper 2 begrenzte und mit Dämpfungsflüssigkeit gefüllte Kammer 16 mit einem Ausgleichsraum 17 in Verbindung steht, der von der Membran 7 und dem tellerartigen Faltenbalg 8 eingeschlossen ist. Dabei besitzt der tellerartige Faltenbalg 8 in diesem Ausführungsbeispiel einen U-förmigen Rand 18, über den der Faltenbalg 8 in einen umlaufenden Flansch 19 der Deckplatten 9 eingesteckt und mit diesem zusammen ebenfalls in die Bördelung 6 des Verbindungsflansches 5 eingespannt ist.

Der tellerartige Faltenbalg 8 ist so geformt, daß beim überströmen von Dämpfungsflüssigkeit aus der Kammer 16 über die Drosselöffnung 15 in den Ausgleichsraum 17 kein Druckanstieg bzw. kein nennenswerter Druckanstieg entsteht. Die den Ausgleichsraum 17 nach außen abschirmende Deckplatte 9 schützt den Faltenbalg 8 vor Beschädigungen. Die Deckplatte 9 weist eine Be- und Entlüftungsöffnung 20 auf, durch die bei einer Vergrößerung des Ausgleichsraumes 17 ein Druckaufbau in dem zwischen Faltenbalg 8 und Deckplatte 9 bestehenden, freien Raum 21 ausgeschlossen ist. Die Deckplatte 9 trägt ferner einen Befestigungsstift 22.

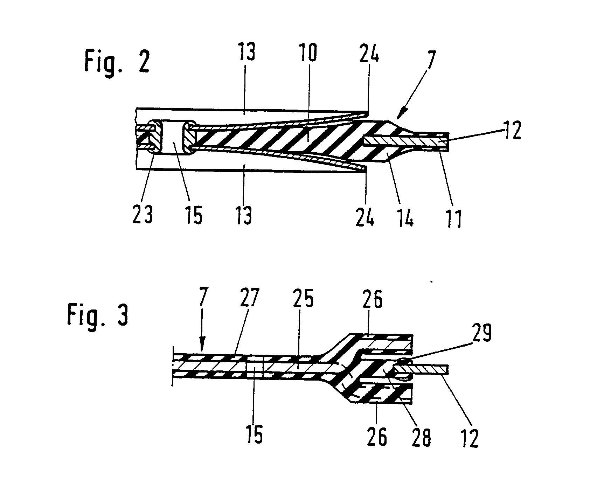

In den Ausführungsbeispielen der Figuren 2 bis 3 sind Membranen 7 gezeigt, denen besondere ringförmige Anschläge zugeordnet sind und die dadurch die weiter oben angeführten unterschiedlichen Dämpfungseigenschaften sicherstellen.

Dabei wird die Membran 7 der Figur 2 durch ein Gummiteil 10 mit einem am äußeren Rand 11 eingebetteten Blechring 12 gebildet, was der Figur 1 entspricht. Zusätzlich trägt das Gummiteil 10 auf beiden Seiten zentrisch aufgesetzte Platten 13, die mittels eines Hohlnietes 23 miteinander verbunden sind. Die Bohrung des Hohlnietes 23 bildet dabei die Drosselöffnung 15. Durch einen Preßvorgang sind die Platten 13 so geformt, daß der äußere Rand derselben einen vorgegebenen Absand vom Gummiteil 10 aufweist. Beim Betrieb des Einkammerlagers 1 bildet dieser Rand Anschläge 24 für die Federung der Membran, wodurch sich die angestrebte Dämpfungscharakteristik des Lagers 1 ergibt.

Die Membran 7 der Figur 3 besteht aus einem kreisförmigen Blech 25, das an seinem Außenrand mit abwechselnd nach beiden Seiten abgekröpften Vorsprüngen 26 versehen und in Gummi 27 eingebettet ist. Im Zentrum der Membran 7 ist eine Drosselöffnung 15 eingearbeitet. Zwischen den in Gummi gebetteten Vorsprüngen 26 befindet sich ein umlaufendes Mittelteil 28, ebenfalls aus Gummi, das mit einem Blechring 12 zur Einspannung in die Bördelung 6 des Verbindungsflansches 5 verbunden ist. An dem Mittelteil 28 sind beidseitig Noppen 29 vorgesehen, die bei der Verformung der Membran 7 Anschläge für die Vorsprünge 26 bilden und somit die Verformung bzw. Federung der Membran begrenzen.

Bezugszeichenliste
1 Einkammerlager
2 Lagerkörper
3 Gewindebohrung
4 Gummifeder
5 Verbindungsflansch
6 Bördelung
7 Membran
8 Faltenbalg
9 Deckplatte
10 Gummiteil
11 Rand
12 Blechring
13 Platten
14 Wulst
15 Drosselöffnung
16 Kammer
17 Ausgleichsraum
18 Rand
19 Flansch
20 Be- und Entlüftungsöffnung
21 Raum
22 Befestigungsstift
23 Hohlniet
24 Anschläge
25 Blech
26 Vorsprung
27 Gummi
28 Mittelteil
29 Noppen

## Patentansprüche

1. Hydraulisch dämpfendes Lager (1), insbesondere Motorlager für Kraftfahrzeuge, bestehend aus einem Lagerkörper (2) mit kegeliger Außenfläche und einem damit verbundenen, ringförmigen, gummielastischen Federelement (4), einem an dem Federelement angeschlossenen, eine Membran (7), einen Faltenbalg (8) und eine Deckplatte (9) aufnehmenden Verbindungsflansch (5), einer von Lagerkörper, Federelemente, Verbindungsflansch und Membran begrenzten, mit Dämpfungsflüssigkeit gefüllten Kammer (16) und einem von der Membran und dem Faltenbalg umschlossenen Ausgleichsraum (17), der über eine Drosselöffnung (15) in der Membran mit der Kammer verbunden ist und zumindest einen Teil der Dämpfungsflüssigkeit drucklos aufnimmt, wobei die aus elastischem Werkstoff bestehende Membran Anschlagflächen aufweist, welchen nahe der Einspannstelle beidseitig je ein ringförmiger Anschlag (24, 26) zugeordnet ist, dadurch gekennzeichnet, daß die ringförmigen Anschläge (24, 26) auf der Membran (7) radial von innen nach außen verlaufend im axialen Abstand zu den Anschlagflächen angeordnet sind, daß die ringförmigen Anschläge Bestandteil der Membran (7) sind und daß die Oberflächen der Membran (7) im benachbarten Bereich der Einspannstelle der Membran (7), als Anschlagfläche dienen.

2. Lager nach Anspruch 1, dadurch gekennzeichnet, daß die Anschläge (24) durch zentrisch auf der Membran (7) befestigte Platten (13) gebildet sind.

3. Lager nach Anspruch 1, dadurch gekennzeichnet, daß die Anschläge (24, 26, 32) der Membran (7) durch abwechselnd nach beiden Seiten abgekröpfte Vorsprünge (26) eines in die Membran (7) eingebetteten Bleches (25) gebildet sind.

**Revendications**

1. Support à amortissement hydraulique (1), notamment support-moteur pour véhicules automobiles, comprenant un corps de support (2) à surface externe conique, un élément élastique (4), annulaire, possédant l'élasticité du caoutchouc et fixé à ce corps, un collet d'assemblage (5) fixé à l'élément élastique et qui retient une membrane (7), un soufflet (8) et une plaque de fermeture (9), une chambre (16) d'élimitée par le corps du support, l'élément élastique, le collet d'assemblage et la membrane et qui est remplie de liquide d'amortissement, et une enceinte d'équilibrage (17) entourée par la membrane et par le soufflet, qui est reliée à la chambre par un orifice d'étranglement (15) ménagé dans la membrane et qui reçoit sans pression au moins une partie du liquide d'amortissement, la membrane constituée par une matière élastique présentant des surfaces de butée auxquelles est associée des deux côtés une butée annulaire (24, 26) à proximité de la zone de fixation, caractérisé en ce que les butées annulaires (24, 26) sont disposées à distance axiale des surfaces de butée en s'étendant radialement sur la membrane (7) de l'intérieur vers l'extérieur, en ce que les butées annulaires font partie de la membrane (7) et en ce que les surfaces de la membrane (7) dans le domaine voisin de la zone de fixation de la membrane (7) servent de surface de butée.

2. Support selon la revendication 1, caractérisé en ce que les butées (24) sont formées par des plaquettes (13) fixées sur la membrane (7) en position centrale.

3. Support selon la revendication 1, caractérisé en ce que les butées (24, 26, 32) de la membrane (7) sont formées par des dents (26) d'une tôle (25) noyée dans la membrane (7), ces dents étant recourbées alternativement vers les deux côtés.

**Claims**

1. Hydraulically damped mounting (1), in particular an engine mounting for motor vehicles, comprising a mounting body (2) having a conical external surface and a ring-shaped rubber-elastic spring element (4) bonded to it, a connecting flange (5) joined to the spring element and retaining a diaphragm (7), a flexible bag (8) and a cover plate (9), a chamber (16) defined by the mounting body, spring element, connecting flange and diaphragm and filled with damping fluid and a balance chamber (17) enclosed by the diaphragm and the flexible bag and connected to the chamber through a throttling opening (15) in the diaphram and receiving at least some of the damping fluid without pressure, the diaphragm made of elastic material having stop surfaces with which are associated near the clamping point on each side a respective annular stop (24, 26), characterised in that the ring-shaped stops (24, 26), are arranged on the diaphragm (7) extending radially from inwards to outwards and axially spaced with respect to the stop surfaces, that the ring-shaped stops are components of the diaphragm (7) and that the surfaces of the diaphragm (7) in the adjacent region of the clamping point of the diaphragm (7) serve as stop surfaces.

2. Mounting according to claim 1, characterised in that the stops (24) are formed by plates (13) secured centrally on the diaphragm (7).

3. Mounting according to claim 1, characterised in that the stops (24, 26, 32) of the diaphragm (7) are formed by projections (26) of a metal sheet (25) embedded in the membrane (7), the projections being offset alternately to the two sides.

Fig. 1

Fig. 2

13    10    24    7

23    15    13    24    14    11

Fig. 3

7    27    25    26    29

15    26    28    12